# EUROPEAN PATENT SPECIFICATION

(11) **EP 0 596 138 B1**
(45) Date of publication and mention of the grant of the patent: **02.05.1997**
(21) Application number: 93910363.6
(22) Date of filing: 20.05.1993
(51) Int. Cl.: C08F 2/32, C08F 2/44, C08F 220/14, C08F 212/08, C08F 220/20, C08F 2/18

(54) **FINE BOWL-SHAPED PARTICLE AND PRODUCTION THEREOF**
FEINES SCHALENFÖRMIGES TEILCHEN UND SEINE HERSTELLUNG
FINE PARTICULE EN FORME DE BOL ET PROCEDE DE PRODUCTION CORRESPONDANT

(30) Priority: 20.05.1992 JP 127260/92
(43) Date of publication of application: 11.05.1994
(73) Proprietor: MATSUMOTO YUSHI-SEIYAKU CO., LTD., Yao-shi, Osaka-581 (JP)
(72) Inventor: YOSHIKAWA, Hirofumi, Matsumoto Yushi, 2-chome, Yao-shi, Osaka 581 (JP)
(74) Representative: Baverstock, Michael George Douglas
(86) International application number: PCT/JP93/00662
(87) International publication number: WO 93/23437

(56) References cited:
- JP-A-50 155 290
- JP-A-54 071 130

## Description

### TECHNICAL FIELD

The present invention relates to a bowl-shaped microparticle and the production thereof.

### BACKGROUND OF THE ART

Microparticles produced by suspension polymerization of polymerizable monomers have been known, but they are all substantially spherical ones, and non-spherical microparticles have not been known at all.

Microparticles are used for adsorbents, release controlling agents and extenders, for perfumes, pharmaceuticals, agriculturals, cosmetics and so on, but spherical microparticles have a deficiency namely low water uptake when used as the adsorbents. Japanese Patent Application KOKAI No. Sho 63-170437 discloses microparticles having numerous fine pores (described as "microsponge") to improve water uptake, but these microparticles are inadequate in adhesiveness to skin.

### DISCLOSURE OF THE INVENTION

The object of the present invention is to provide new non-spherical microparticles which are excellent in extendibility and adhesiveness (e.g. to skin) as well as water uptake. Microparticles having such properties improve, for example, adhesiveness on skin, and water uptake and maintain extendibility on the skin when compared with conventional spherical microparticles.

The present invention relates to bowl-shaped microparticles which are hemispherical or half ellipsoidal spherical having a large opening at the center, and a water uptake of 80 - 140 ml/g, and the production thereof.

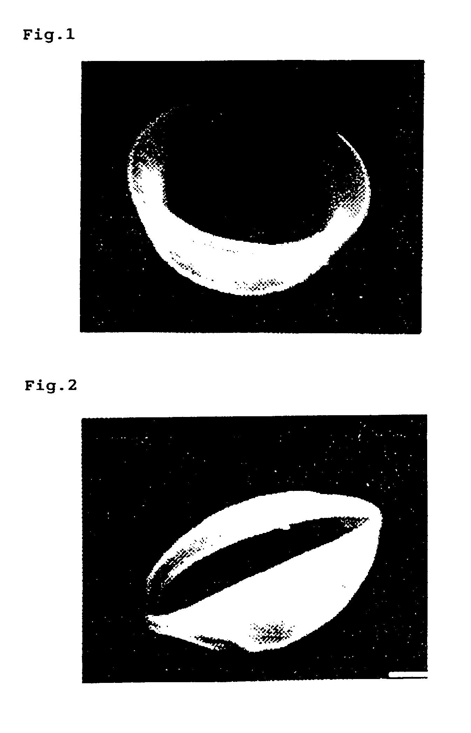

As specific examples the bowl-shaped microparticles according to the present invention have a large opening at the center and a near hemisphere shape or a near half ellipsoidal sphere as illustrated in Figs. 1 and 2, and ones having a half closed opening as illustrated in Fig. 2.

The microparticles of such shape have a water uptake of from 80 to 140 ml/g, which is much higher than that of spherical microparticles made of the same materials and of substantially the same average particle size, i.e. 40 - 80 ml/100 g.

The average diameter of the opening (the length of opening in the case of a half ellipsoidal sphere) of the microparticles of the present invention is preferably from 2 to 100 µm, more preferably from 3 to 50 µm. By controlling the opening diameter of the microparticles within this range excellent extendibility and adhesiveness can be given thereto.

Polymerizable monomers usable in the present invention include, for example, styrene, methylstyrene, vinyltoluene, methacrylic esters, acrylic esters, vinyl acetate, acrylonitrile, vinyl chloride, vinylidene chloride, chloroprene, isoprene, butadiene, acrolein, acrylamide, allyl alcohol, vinyl pyridine, vinyl benzoate, allyl benzoate and mixtures thereof. As the ester residue of acrylic esters and methacrylic esters one having carbon numbers of 1 - 18 are preferred, and carbon numbers of 1 - 4, especially methyl or ethyl ester is more preferred. Free acrylic acid or methacrylic acid may be copolymerized as a portion of monomers, and the polymerized polymer obtained can be crosslinked by the addition of polyvalent metallic compounds such as calcium, magnesium and zinc, for instance, in the form of hydroxides.

The above monomers may be used singly or plurally to give a copolymer. Particularly copolymers obtained from two or more monomers selected from styrene, methacrylic esters, acrylic esters, vinyl acetate and acrylonitrile are preferred.

As crosslinking agent divinylbenzene, ethylene dimethacrylate, triethylene glycol dimethacrylate, ethylene glycol dimethacrylate, 1,3-butylene dimethacrylate, allyl methacrylate and trimethylolpropane trimethacrylate can be preferably used. Two or more kinds of crosslinking agent may be used.

These crosslinking agents are important for making the particles a bowl-shape. The necessary amount of the crosslinking agent to the polymerizable monomer is 0.1 to 30 % by weight, more preferably 1 to 20 % by weight. This amount of crosslinking agent greatly influences the shape of the microparticle. As the amount of crosslinking agent decreases, the degree of deformation of the microparticle becomes less, and the particles form spheres without deformation when the amount of the crosslinking agent is less than 0.1 % by weight. On the other hand, an excess amount of the crosslinking agent is not desirable, because encapsulated hydrophobic material is liable to be removed.

The hydrophobic liquid to be used in the present invention should have a boiling point of 100 °C or higher, and a melting point at 0 °C or lower. The preferable solubility in water and viscosity of the hydrophobic liquid are 2g/100 ml or less, and from 1 to 500 m.Pas (cps), respectively, though this is not critical.

The hydrophobic liquid includes hydrocarbons such as liquid paraffin, and isoparaffin; animal oils such as squalane, and mink oil; vegetable oils such as avocado oil, macadamia oil, and olive oil; esters such as diglyceride; ethers such as macromolecular polypropylene glycol, dibutyl ether, butyl cellosolve, anisole, and phenetole; and silicones, such as octamethylsiloxane, and silicone oils. Liquid paraffin, isoparaffin, avocado oil, and silicone oil are the most preferred.

The hydrophobic liquid is encapsulated in the polymer particles through the polymerization, when the polymer particles are deformed to the bowl-shaped microparticles. If the shell layer is too thin, the microparticles obtained are easily crushed, and if too thick, they form spheres without deformation. The thickness of the microparticles becomes thin when a large amount of the hydrophobic liquid is used, so that the particles deform greatly, whereas the less the amount of it, the thicker the shell which is obtained and the particles deform less. The amount of the hydrophobic material is 15 to 100 percent by weight based on the total amount of the polymerisable monomer and the cross-linking agent, because a lesser amount of the hydrophobic material gives spherical particles. Within this range the amount of the hydrophobic liquid may be controlled according to the desired shape of the microparticles.

The amount of the hydrophobic material greatly influences the shape of the microparticles. When the other conditions are the same, a smaller amount of hydrophobic material makes the thicker shell of the bowl-shape microparticles, and the larger the amount the thinner the shell. When a large amount of the hydrophobic material is used, the bowl becomes ellipsoidal. When the hydrophobic material is used in an amount of about 15 to 25 percent by weight the shape of the microparticles becomes almost a spherical bowl, and when the amount exceeds about 25 percent by weight the particles gradually change to an ellipsoidal bowl shape. When the amount is more than 35 percent by weight, it makes the opening of the bowl almost closed.

In the production of bowl-shape microparticles of the present invention a kind of in situ polymerization may be applied. That is, polymerizable monomers are polymerized by suspension polymerization in water in the presence of a crosslinking agent, hydrophobic liquid and polymerization initiator whilst stirring to give microparticles encapsulating the hydrophobic liquid in a shell of the polymer.

The polymerization initiator includes radical catalysts such as benzoyl peroxide, methyl ethyl ketone peroxide, t-butyl peroxide, 2,2'-azobisisobutyronitrile, and 2,2'-azobis(2,4-dimethyl)valeronitrile.

Into the aqueous medium a suspension stabilizer such as polyvinyl alcohol, gelatin, methyl cellulose, sodium alginate, calcium phosphate, colloidal silica, bentonite and aluminum oxide may be added. In addition, aggregation inhibitors such as titanium oxide, calcium carbonate, barium sulfate, mica, talc, and magnesium carbonate, may be used in order to prevent the aggregation of the microparticles when drying.

The polymerization may proceed at 50 to 95 °C in general.

The particle size can be controlled by the stirring rate, and a preferred stirring rate is about 50 to 500 rpm, especially 100 to 300 rpm. The period required for the polymerization is from 3 to 24 hours and usually from 4 to 10 hours. These conditions are suitable for the production of microparticles of 2 to 100 µm.

The microparticles obtained are filtered, and then dried at a temperature lower than the softening temperature of the polymer, generally at 30 to 90 °C.

### BRIEF DESCRIPTION OF DRAWING

Fig. 1: SEM photograph of a bowl-shaped microparticle of Example 1 of the present invention.

Fig. 2: SEM photograph of a bowl-shaped microparticle of Example 2 of the present invention.

### The Best Mode Of The Present Invention

The present invention is illustrated in detail by the following Examples.

### EXAMPLE 1

An oil phase and a water phase were prepared according to the following formulations:

| OIL PHASE | |
|---|---|
| ingredients | parts by weight |
| methyl methacrylate | 108 |
| ethylene glycol dimethacrylate | 12 |
| liquid paraffin | 30 |
| 2,2'-azobisbutyronitrile | 1 |

| WATER PHASE (pH 3.3: adjusted with H₂SO₄) | |
|---|---|
| ingredients | parts by weight |
| deionized water | 300 |
| colloidal silica (solid 20%) | 15 |
| adipic acid-diethanolamine condensation products (concentration: 50%) | 1 |

The above oil phase was dispersed into the water phase using a high speed stirring for 3 minutes using a T.K.Homomixer made by Tokushu Kika Kogyo K.K. The dispersion obtained was charged into a 1.5 liter separable flask purged with nitrogen gas, and polymerized at 65 °C for 5 hours at 200 rpm revolutions. The reaction product was filtered to give a cake like product containing 28 % water. This cake like product was dried at 80 °C for 5 hours to give white microparticles of an average diameter of 5 to 15 µm. The shape of microparticles was bowl-shaped spheres. An SEM photograph of a microparticle obtained is illustrated by Fig. 1.

The water uptake of the microparticles was 105 ml/100g, higher than that of conventional microcapsules.

### EXAMPLE 2

An oil phase was prepared according to the following formulation.

| OIL PHASE | |
|---|---|
| ingredients | parts by weight |
| methyl methacrylate | 90 |
| ethylene glycol dimethacrylate | 10 |
| liquid paraffin | 50 |
| 2,2'-azobisisobutyronitrile | 0.6 |

Microparticles were prepared using the above oil phase and the water phase of the Example 1 according to the same manner as Example 1. The microparticles obtained were an average diameter of 5 to 15 µm, white, and elliptical bowl-shaped. The SEM photograph of a particle is shown by Fig. 2.

The water uptake of the microparticles is very high, i.e. 120 ml/100 g.

### COMPARATIVE EXAMPLE 1

An oil phase containing small amount of hydrophobic liquid was prepared according to the following formulation.

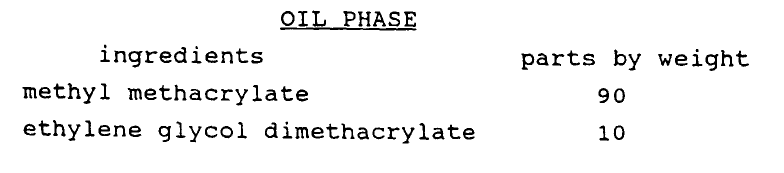

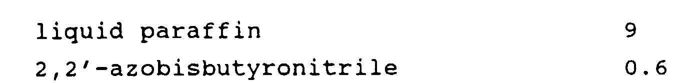

Microparticles were prepared using the above oil phase and the water phase of the Example 1 according to the same manner as in the Example 1. The microparticles obtained had an average diameter of 10 µm and a spherical shape.

### COMPARATIVE EXAMPLE 2

An oil phase containing no crosslinking agent was prepared according to the following formulation.

| OIL PHASE | |
|---|---|
| ingredients | parts by weight |
| methyl methacrylate | 90 |
| liquid paraffin | 50 |
| 2,2'-azobisbutyronitrile | 0.6 |

Microparticles were prepared using the above oil phase and the water phase of the Example 1 according to the same manner as in the Example 1. The microparticles obtained were spherical particles having an average diameter of 10 µm.

### POSSIBLE USES IN INDUSTRY

According to the present invention new bowl-shaped microparticles having a large hollow at the center can be provided. The microparticles of the present invention are expected to be used for adsorbents, release controlling agents and extenders for perfumes, pharmaceuticals, agriculturals and cosmetics.

## Claims

1. Bowl-shaped microparticles of hemispherical or half elliptical spherical shape having a large opening at the center, and a water uptake of from 80 to 140 ml/100 g.

2. Bowl-shaped microparticles as claimed in claim 1, in which the average diameter of the opening is 2 to 100 µm.

3. A process for production of bowl-shaped microparticles as claimed in claim 1 or claim 2 which comprises suspension-polymerizing in water polymerizable monomers in the presence of a crosslinking agent in an amount of 0.1 to 30% by weight based on the polymerizable monomer and a hydrophobic liquid in an amount of 15 to 100 percent by weight based on the total amount of the polymerizable monomer and the crosslinking agent.

4. A process as claimed in claim 3, in which at least one of the polymerizable monomers is selected from styrene, methacrylic esters, acrylic esters, vinyl acetate, acrylonitrile and mixtures thereof.

5. A process as claimed in claim 3 or claim 4, in which the crosslinking agent is selected from divinylbenzene, ethylene dimethacrylate, triethylene glycol dimethacrylate, ethylene glycol dimethacrylate, 1,3-butylene dimethacrylate, allyl methacrylate, trimethylolpropane and mixtures thereof.

6. A process as claimed in any one of claims 3 to 5, in which the hydrophobic liquid is selected from hydrocarbons, esters, ethers, silicone oils, animal oils, vegetable oils and mixtures thereof, which have a boiling point of 100 °C or higher and a melting point of O °C or lower.

7. A process as claimed in any one of claims 3 to 6, in which the amount of the crosslinking agent is 0.5 to 30 percent by weight based on the polymerizable monomer.

8. Use of the bowl-shaped microparticles as claimed in claim 1 or claim 2, or produced by the process of any one of claims 3 to 7, in the manufacture of perfumes, pharmaceuticals, agricultural products and cosmetics.

## Patentansprüche

1. Schalenförmige Mikroteilchen mit hemisphärischer oder halbelliptischer sphärischer Form mit großer Öffnung im Zentrum und einer Wasseraufnahme von 80 bis 140 ml/100 g.

2. Schalenförmige Mikroteilchen nach Anspruch 1, dadurch **gekennzeichnet,** daß der durchschnittliche Durchmesser der Öffnung 2 bis 100 µm beträgt.

3. Verfahren zur Herstellung schalenförmiger Mikroteilchen nach Anspruch 1 oder 2 durch Suspensionspolymerisation in Wasser polymerisierbarer Monomerer in Anwesenheit eines Vernetzungsmittels in einer Menge von 0,1 bis 30 Gew.-%, bezogen auf das polymerisierbare Monomere, und einer hydrophoben Flüssigkeit in einer Menge von 15 bis 100 Gew.-%, bezogen auf die Gesamtmenge an polymerisierbarem Monomeren und Vernetzungsmittel.

4. Verfahren nach Anspruch 3, dadurch **gekennzeichnet,** daß mindestens eines der polymerisierbaren Monomeren ausgewählt wird aus Styrol, Methacrylsäureestern, Acrylsäureestern, Vinylacetat, Acrylnitril und deren Gemischen.

5. Verfahren nach Anspruch 3 oder 4, dadurch **gekennzeichnet,** daß das Vernetzungsmittel ausgewählt wird aus Divinylbenzol, Ethylendimethacrylat, Triethylenglykoldimethacrylat, Ethylenglykoldimethacrylat, 1,3-Butylendimethacrylat, Allylmethacrylat, Trimethylolpropan und Gemischen davon.

6. Verfahren nach einem der Ansprüche 3 bis 5, dadurch **gekennzeichnet,** daß die hydrophobe Flüssigkeit ausgewählt wird aus Kohlenwasserstoffen, Estern, Ethern, Silikonölen, tierischen Ölen, pflanzlichen Ölen und deren Gemischen, die einen Siedepunkt von 100°C oder darüber und einen Schmelzpunkt von 0°C oder darunter besitzen.

7. Verfahren nach einem der Ansprüche 3 bis 6, dadurch **gekennzeichnet,** daß die Menge an Vernetzungsmittel 0,5 bis 30 Gew.-%, bezogen auf das polymerisierbare Monomere, beträgt.

8. Verwendung der schalenförmigen Mikroteilchen nach Anspruch 1 oder Anspruch 2 oder hergestellt gemäß dem Verfahren nach einem der Ansprüche 3 bis 7 zur Herstellung von Parfums, Pharmazeutika, landwirtschaftlichen Produkten und Kosmetika.

## Revendications

1. Microparticules en forme de bol, de forme hémisphérique ou demi-sphérique elliptique, ayant une grande ouverture au centre, et une capacité d'absorption d'eau de 80 à 140 ml/100 g.

2. Microparticules en forme de bol selon la revendication 1, dans lesquelles le diamètre moyen de l'ouverture est de 2 à 100 µm.

3. Procédé de fabrication des microparticules en forme de bol selon la revendication 1 ou la revendication 2, qui comprend la polymérisation en suspension dans l'eau de monomères polymérisables en présence d'un agent de réticulation dans une quantité de 0,1 à 30% en poids sur la base du monomère polymérisable et d'un liquide hydrophobe dans une quantité de 15 à 100 pour cent en poids sur la base de la quantité totale du monomère polymérisable et de l'agent de réticulation.

4. Procédé de fabrication selon la revendication 3, dans lequel au moins l'un des monomères polymérisables est choisi parmi le styrène, les esters méthacryliques, les esters acryliques, l'acétate de vinyle, l'acrylonitrile et leurs mélanges.

5. Procédé selon la revendication 3 ou la revendication 4, dans lequel l'agent de réticulation est choisi parmi le divinylbenzène, le diméthacrylate d'éthylène, le diméthacrylate de triéthylène glycol, le diméthacrylate d'éthylène glycol, le diméthacrylate de 1,3-butylène, le méthacrylate d'allyle, le triméthylol propane et leurs mélanges.

6. Procédé selon l'une des revendications 3 à 5, dans lequel le liquide hydrophobe est choisi parmi les hydrocarbures, les esters, les éthers, les huiles de silicone, les huiles animales, les huiles végétales et leurs mélanges, qui ont un point d'ébullition de 100°C ou au-dessus et un point de fusion de 0°C ou au-dessous.

7. Procédé selon l'une des revendications 3 à 6, dans lequel la quantité de l'agent de réticulation est de 0,5 à 30 pour cent en poids sur la base du monomère polymérisable.

8. Utilisation des microparticules en forme de bol telles que définies à la revendication 1 ou à la revendication 2, ou obtenues par le procédé tel que défini à l'une des revendications 3 à 7, dans la fabrication de parfums, de produits pharmaceutiques, de produits pour l'agriculture et de produits cosmétiques.
